# EUROPÄISCHE PATENTANMELDUNG

(11) **EP 1 188 728 A1**
(43) Veröffentlichungstag der Anmeldung: **20.03.2002**
(21) Anmeldenummer: 01118671.5
(22) Anmeldetag: 03.08.2001
(51) Int. Cl.: C04B 35/622, C04B 41/52, B32B 18/00

(54) **Nanoskalige Teilchen enthaltende keramische Schicht, keramischer Schichtkörper mit derartigen Schichten und Verfahren zu deren Herstellung**

(30) Priorität: 10.08.2000 DE 10038987
(71) Anmelder: ROBERT BOSCH GMBH, 70442 Stuttgart (DE)
(72) Erfinder: Kanters, Johannes, 47918 Tönisvorst (DE); Eisele, Ulrich, 70199 Stuttgart (DE)

(57) **Zusammenfassung**

Es wird eine keramische Schicht (13, 22, 26) mit einer Dicke von weniger als 100 µm vorgeschlagen, die durch Sintern einer Ausgangsschicht (13') mit Keramikpartikeln erhalten worden ist, die eine mittlere Teilchengröße von weniger als 150 nm aufwiesen. Weiter wird ein keramischer Schichtkörper (14, 25) mit einer Mehrzahl derartiger, übereinander angeordneter, stoffschlüssig miteinander verbundener Schichten (13, 22, 26) vorgeschlagen. Schließlich wird ein Verfahren zur Herstellung einer solchen keramischen Schicht (13, 22, 26) und eines solchen keramischen Schichtkörpers (14, 25) vorgeschlagen, wobei eine keramikhaltige Suspension auf einem Substrat (11) in Form einer Ausgangsschicht (13') mit einer Dicke von weniger als 100 µm aufgerakelt wird, die danach zu der keramischen Schicht (13, 22, 26) gesintert wird. Soll ein keramischer Schichtkörper (14, 25) mit mehreren keramischen Schichten (13, 22, 26) hergestellt werden, wird die aufgerakelte Ausgangsschicht (13') zunächst getrocknet, dann mindestens eine weitere Ausgangsschicht mit einer Dicke von weniger als 100 µm auf die getrocknete Ausgangsschicht (13') aufgerakelt, und die erhaltene Schichtabfolge dann gesintert.

## Beschreibung

Die Erfindung betrifft eine dünne keramische Schicht, einen keramischen Schichtkörper mit mehreren derartigen, miteinander verbundenen Schichten, sowie ein Verfahren zur Herstellung der Schicht und des Schichtkörpers nach der Gattung der unabhängigen Ansprüche.

### Stand der Technik

Bei der Herstellung von keramischen Folien aus einer keramikhaltigen Suspension bzw. einem keramikhaltigen Dispergat, d. h. beispielsweise einem keramikhaltigen Schlicker oder einer keramikhaltigen Paste, ist bekannt, diese Suspension zunächst auf einen Träger in Form einer Schicht auszugießen und nachfolgend zu trocknen, bevor sie von dem Träger gelöst und gesintert wird.

Die Trocknung der Folie führt bei diesem Verfahren jedoch vielfach dazu, dass die Oberfläche des vergossenen Schlikkers bzw. der vergossenen Suspension ungleichmäßig aufgebaut ist, so dass die nach einem beispielsweise freien Sintern, d.h. einem Sintern ohne zusätzliche Beschwerung, erhaltene Keramikschicht wellig verkrümmt ist. Derartige Verkrümmungen treten insbesondere bei dünnen keramischen Folien auf, während relativ dicke keramische Folien, d. h. Folien mit einer Dicke von mehr als 200 um, in der Regel genügend Steifigkeit besitzen, um ein Verkrümmen beim Sintern zu verhindern.

Neben dem Vergießen keramischer Suspensionen ist weiter auch die Herstellung dünner keramischer Folien durch Elektrophorese bekannt, wobei elektrisch geladene keramische Pulverteilchen auf ein ebenfalls elektrisch geladenes Substrat abgeschieden werden. Auch bei diesem Verfahren zeigen die hergestellten keramischen Folien jedoch vielfach einen ungleichmäßigen Aufbau, der beim Sintern zu Verkrümmungen führt.

In der Anmeldung DE 199 60 091.0 ist ein keramikhaltiges Dispergat vorgeschlagen worden, das in Dickschichtpasten einsetzbar ist und das eine besonders niedrige Sintertemperatur aufweist. Dieses Dispergat enthält eine nanoskalige keramische Komponente wie ein Metalloxid, ein Metallcarbid oder ein Metallnitrid in redispergierbarer Form in einem Lösungsmittel. Mittels Zugabe eines Binders und eines Weichmachers ist weiter die Viskosität einer unter Verwendung dieses Dispergates hergestellten Dickschichtpaste einstellbar. Mit dieser Dickschichtpaste sind daher auch mit einem Substrat verbundene keramische Funktionsschichten erhältlich.

### Vorteile der Erfindung

Die erfindungsgemäße keramische Schicht, der erfindungsgemäße keramische Schichtkörper und die erfindungsgemäßen Verfahren zur Herstellung einer derartigen Schicht bzw. eines derartigen Schichtkörpers haben gegenüber dem Stand der Technik den Vorteil, dass die erhaltenen dünnen keramischen Schichten oder keramischen Schichtkörper auch nach einem freien Sintern, d. h. einem Sintern der Schicht bzw. des Schichtkörpers ohne eine zusätzliche Beschwerung, eine Krümmung von typischerweise weniger als 20 mm⁻¹ aufweisen und somit gegenüber dem Stand der Technik deutlich formstabiler sind. Eine besonders starke Verminderung der Verkrümmung und eine besonders hohe Formstabilität wird dabei dadurch erreicht, dass ein keramischer Schichtkörper mit einer Vielzahl von dünnen keramischen Schichten erzeugt wird, die übereinander angeordnet und durch das Sintern stoffschlüssig miteinander verbunden worden sind. In diesem Fall ist selbst dann, wenn die einzelnen keramischen Schichten noch geringfügig ungleichmäßig aufgebaut sein sollten, dennoch der gesamte Schichtkörper weitgehend homogen aufgebaut und damit auch beim freien Sintern stets formstabil. Dabei nutz man aus, dass die einzelnen Schichten in dem Schichtkörper vorhandene Inhomogenitäten durch den mehrlagigen Aufbau ausgleichen.

Durch die sehr gute Formstabilität und die Möglichkeit des freien Sinterns ist die erhaltene dünne keramische Schicht bzw. der erhaltene keramische Schichtkörper weiter vorteilhaft auch zur Untersuchung des freien Sinterverhaltens von keramischen Pasten geeignet, wie sie beispielsweise in der keramischen Dickschichttechnik Verwendung finden. Zudem eignet sich die erfindungsgemäße keramische Schicht bzw. der erfindungsgemäße keramische Schichtkörper besonders auch zur Herstellung von dünnen, insbesondere freitragenden keramischen Membranen.

Die erfindungsgemäßen Verfahren haben gegenüber dem Stand der Technik den Vorteil, dass nun auch keramikhaltige Suspensionen zu dünnen Schichten verarbeitbar sind, die Keramikpartikel enthalten, die eine mittlere Teilchengröße von weniger als 150 nm, insbesondere weniger als 50 nm aufweisen.

Vorteilhafte Weiterbildungen der Erfindung ergeben sich aus den in den Unteransprüchen genannten Maßnahmen.

So ist es besonders vorteilhaft, dass mit Hilfe der erfindungsgemäßen Verfahren auch höher viskose Schlicker bzw. keramikhaltige Suspensionen mit entsprechend gesteigertem Feststoffgehalt von über 60 Vol% verarbeitbar sind. Daneben erlauben es die erfindungsgemäßen Verfahren die vor dem Sintern zunächst erzeugten Ausgangsschichten in einfacher Weise zumindest oberflächlich mit einer Strukturierung zu versehen, die beispielsweise wellenförmig, zackenförmig, sägezahnförmig, rillenförmig, kammförmig oder pyramidenförmig ausgebildet ist. Eine derartige Strukturierung der Oberfläche der Ausgangsschicht führt zu einer verbesserten Haftung mehrerer derartiger, übereinander angeordneter Schichten bei deren Verarbeitung zu einem Schichtkörper. Solch ein Verbund von Schichten bzw. ein solcher Schichtkörper mit strukturierten Einzelschichten neigt deutlich weniger zur Delamination an Grenzflächen als ein Verbund, der aus Schichten mit glatter Oberfläche hergestellt worden ist. Dabei sei betont, dass man eine besonders gute Haftung durch eine sägezahnförmige Rillung der Oberfläche der Ausgangsschicht erreicht.

Die erläuterte vorteilhafte Strukturierung der Oberfläche der Ausgangsschicht lässt sich im Rahmen der erfindungsgemäßen Verfahren besonders kostengünstig beispielsweise durch Verwendung eines strukturierten Rakels, insbesondere eines Rakels mit gezahnter Kante, oder alternativ auch durch nachträgliches Prägen realisieren.

Durch den hohen Feststoffgehalt in den erfindungsgemäßen Verfahren eingesetzten keramikhaltigen Suspension wird vorteilhaft erreicht, dass die erhaltenen Schichtkörper bzw. Schichten eine besonders niedrige Schwindung von typischerweise weniger als 18% aufweisen. Weiter wird durch den hohen Feststoffgehalt überhaupt erst die Herstellung dichter Schichten oder Schichtkörper möglich.

Dabei ist es ein weiterer Vorzug der erfindungsgemäßen Verfahren, dass ein derart hoher Feststoffgehalt mit der Verwendung von in der keramikhaltigen Suspension enthaltenen Keramikpartikeln mit einer mittleren Teilchengröße von weniger als 150 nm, insbesondere weniger als 50 nm, kombinierbar ist, so dass auch aus Nanopulvern hergestellte Keramikschichten bzw. Schichtkörper erhältlich sind, die nur eine geringe Schwindung aufweisen.

Eine vorteilhafte Ausgestaltung des erfindungsgemäßen Verfahrens und des erfindungsgemäß erhaltenen Schichtkörpers sieht vor, dass dieser aus einer Mehrzahl keramischer Schichten mit zumindest näherungsweise gleicher Zusammensetzung besteht. Alternativ kann der Schichtkörper jedoch auch aus einer insbesondere periodischen Abfolge von unterschiedlich zusammengesetzten keramischen Schichten aufgebaut werden. Die Dicke des erhaltenen keramischen Schichtkörpers hängt somit im Wesentlichen von der Anzahl der einzelnen keramischen Schichten ab, aus der er aufgebaut ist. In diesem Fall kann die Homogenität des erhaltenen keramischen Schichtkörpers dadurch weiter gesteigert werden, dass bei gleichbleibender Dicke des Schichtkörpers entsprechend mehr, jedoch dünnere keramische Schichten durch gemeinsames, beispielsweise freies Sintern zu dem keramischen Schichtkörper verbunden werden.

Vor dem Sintern ist es im Übrigen vorteilhaft, wenn die hergestellte Ausgangsschicht bzw. Ausgangsschichtkörper zunächst von dem Substrat, beispielsweise Mylar-Folie, getrennt wird. Auf diese Weise werden einerseits formstabile, freitragende keramische Schichten bzw. keramische Schichtkörper erhalten, und andererseits muss das Substrat nicht den beim Sintern auftretenden hohen Temperaturen ausgesetzt werden bzw. solchen Temperaturen widerstehen können.

Eine weitere, besonders vorteilhafte Ausgestaltung der erfindungsgemäßen keramischen Schicht bzw. des erfindungsgemäßen keramischen Schichtkörpers sieht schließlich vor, dass die keramische Schicht oder die Ausgangsschichten des Schichtkörpers oberflächlich mit einer insbesondere gerillten Strukturierung versehen werden. Dies führt zu einem weiter verbesserten Zusammenhalt der einzelnen keramischen Schichten in dem erhaltenen keramischen Schichtkörper.

### Zeichnungen

Die Erfindung wird anhand der Zeichnungen und in der nachfolgenden Beschreibung näher erläutert. Die Figur 1 zeigt das Aufrakeln einer Ausgangsschicht auf ein Substrat, Figur 2 zeigt einen keramischen Schichtkörper im Schnitt, Figur 3 zeigt eine Rakel mit strukturierter Kante, Figur 4 zeigt eine keramische Schicht mit rillenförmig strukturierter Oberfläche und Figur 5 zeigt einen keramischen Schichtkörper mit mehreren, strukturierten keramischen Schichten.

### Ausführungsbeispiele

Die Erfindung geht zunächst aus von einer keramikhaltigen Suspension bzw. einem keramikhaltigen Dispergat in Form eines Schlickers mit darin enthaltenen nanoskaligen Keramikpartikeln, wie sie bereits in der Anmeldung DE 199 60 091.0 vorgeschlagen worden ist.

Im Einzelnen wird dazu zunächst eine keramische pulverförmige Ausgangskomponente mit einem Lösungsmittel und einem Dispergator vermischt. Die pulverförmige keramische Ausgangskomponente weist dabei eine spezifische Oberfläche von 15 m²/g bis 120 m²/g, vorzugsweise von 40 m²/g bis 100 m²/g, bei einer mittleren Teilchengröße der Keramikpartikel von weniger als 150 nm, insbesondere weniger als 50 nm, auf.

Als keramische Komponente eignet sich besonders ein nanoskaliges Metalloxid, ein Metallnitrid, ein Metallcarbid oder eine Mischung dieser Materialien. Insbesondere eignen sich Zirkoniumdioxid, Yttrium-stabilisiertes Zirkoniumdioxid, Titandioxid, Yttriumoxid, Titancarbid, Siliziumcarbid, Titannitrid, Siliziumnitrid, Siliziumdioxid oder Aluminiumoxid.

Als Lösungsmittel wird bevorzugt ein Lösungsmittel wie α-Terpineol, Diethylenglycolmonobutylether oder Aceton eingesetzt. Der Dispergator ist beispielsweise eine organische Säure, insbesondere eine wassermischbare, langkettige organische Säure wie Trioxadecansäure. Daneben kann auch Decansäure, Laurinsäure oder gegebenenfalls eine andere organische Säure mit einer Carboxylgruppe und einer Kohlenstoffkette mit 3 bis 20 Kohlenstoffatomen herangezogen werden.

Schließlich wird der keramikhaltigen Suspension noch ein oligomerer oder polymerer Binder wie Ethylcellulose oder Polyvinylbutyral und ein Weichmacher zugesetzt. Als Weichmacher eignen beispielsweise Phtalate, ein Sebacate, Glycolether oder α-Terpineol.

Der Anteil des Lösungsmittels in der keramikhaltigen Suspension ist insgesamt so gewählt, dass die keramische Ausgangskomponente einen Anteil von 30 Vol.% bis 75 Vol.%, insbesondere 50 Vol.% bis 70 Vol.%, der abschließend erhaltenen Suspension einnimmt. Die Viskosität der erhaltenen Suspension liegt weiter zwischen 10 Pa s und 10000 Pa s.

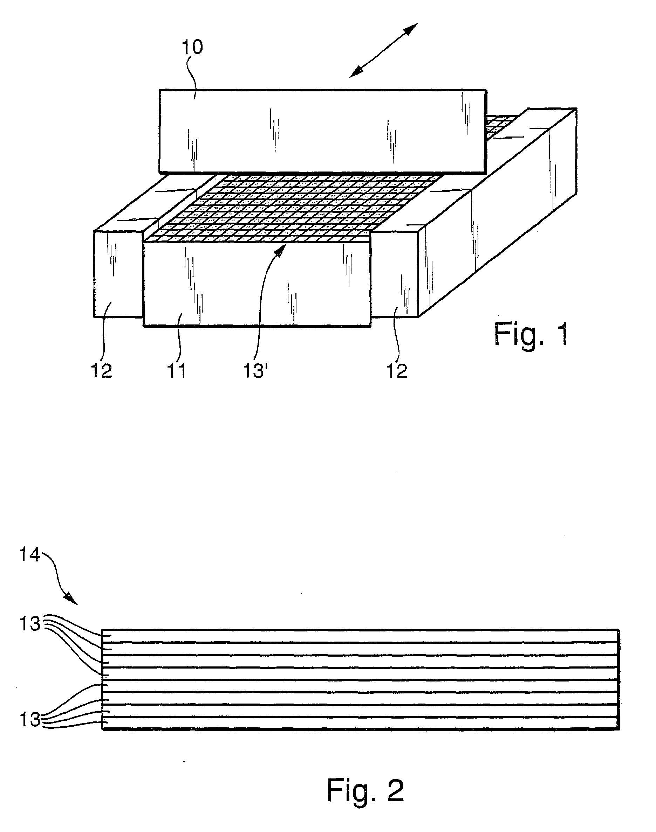

Nach der Vorbereitung der vorbeschriebenen keramikhaltigen Suspension wird zunächst gemäß Figur 1 ein Substrat 11 vorbereitet, das beispielsweise eine Teflonfolie, eine Mylar-Folie (Typbezeichnung "Lumirror", Fa. Torya Co., Japan) oder eine Release-Folie ist. Weiter werden gemäß Figur 1 Abstandshalter 12, beispielsweise in Form eines das Substrat 11 umgebenden Rahmens bereitgestellt, wobei die Abstandshalter 12 eine Höhe aufweisen, die die Dicke des Substrates um die Dicke einer zu erzeugenden Ausgangsschicht 13' übersteigt. Nachdem das Substrat 11 zwischen den Abstandshaltern 12 positioniert worden ist, wird die vorbereitete keramikhaltige Suspension dann mit Hilfe einer Rakel 10 auf die Oberfläche des Substrates 11 aufgerakelt. Dieses Aufrakeln erfolgt dabei derart, dass die Dicke der erzeugten Ausgangsschicht 13' weniger als 50 µm beträgt. Im erläuterten Ausführungsbeispiel liegt die Dicke der Ausgangsschicht 13' bei 30 µm.

Nach dem Aufrakeln der Ausgangsschicht 13' auf das Substrat 11 wird zunächst in bekannter Weise eine Trocknung der aufgerakelten Ausgangsschicht 13' bei einer Temperatur von beispielsweise 80°C über 60 Minuten vorgenommen. Danach wird das Substrat 11 mit der aufgebrachten Ausgangsschicht 13' erneut zwischen den Abstandshaltern 12 derart positioniert, dass zwischen der von der Oberkante der Abstandshalter 12 definierten Ebene und der Oberfläche der Ausgangsschicht 13' erneut eine Höhendifferenz von beispielsweise 3 µm bis 100 µm, insbesondere 30 µm, entsteht, so dass nachfolgend eine entsprechend dicke, weitere Ausgangsschicht auf die getrocknete erste Ausgangsschicht 13' aufgerakelt werden kann.

Dieses Vorgehen wird je nach Anzahl der zu erzeugenden weiteren Ausgangsschichten auf dem Substrat 11 und auf der ersten Ausgangsschicht 13' gegebenenfalls mehrfach wiederholt, so dass ein Schichtkörper aus der Ausgangsschicht 13' und der oder den weiteren Ausgangsschichten entsteht.

Dieser Schichtkörper wird dann in einem nächsten Verfahrensschritt von dem Substrat 11 gelöst und in bekannter Weise gesintert, wobei beispielsweise im Fall von Zirkondioxid-Pulver in der keramikhaltigen Suspension eine Endtemperatur zwischen 950°C und 1250°C und im Fall von Aluminiumoxid-Pulver in der keramikhaltigen Suspension eine Endtemperatur von 1150°C bis 1350°C erreicht wird.

Die Figur 2 erläutert den nach diesem Sintern erhaltenen keramischen Schichtkörper 14, der im erläuterten Beispiel aus insgesamt acht keramischen Schichten 13 besteht, die jeweils eine zumindest näherungsweise gleiche Zusammensetzung und Dicke von 30 µm aufweisen. Die einzelnen Keramikschichten 13 sind weiter durch das gemeinsame Sintern stoffschlüssig miteinander verbunden.

Im Übrigen sei betont, dass das Sintern bevorzugt ein freies Sintern ist, d. h. der zu sinternde Schichtkörper wird nicht beschwert bzw. beim Sintern zusätzlich durch Ausübung von Druck planarisiert oder in seiner Form stabilisiert.

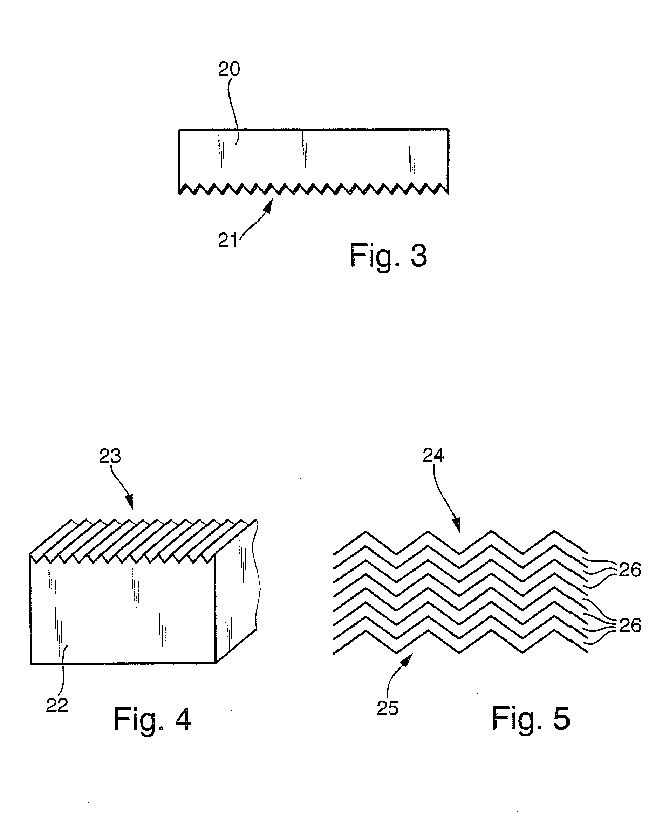

Die Figur 4 erläutert als weiteres Ausführungsbeispiel die Herstellung einer keramischen Schicht 22 mit einer rillenförmigen Oberflächenstrukturierung, die mittels einer Rakel 20 mit einer strukturierten Kante 21 gemäß Figur 3 erzeugt worden ist. Zur Herstellung der keramischen Schicht 22 geht man dabei analog dem mit Hilfe der Figur 1 erläuterten Beispiel vor, wobei man jedoch lediglich eine Ausgangsschicht 13' auf dem Substrat 11 erzeugt, die danach getrocknet und schließlich gesintert wird. Die Strukturierung der Oberfläche der keramischen Schicht 22 ergibt sich dabei automatisch durch das Aufrakeln der Ausgangsschicht 13' auf das Substrat 11 mittels der Rakel 20 gemäß Figur 3.

Die Figur 5 erläutert ein weiteres, zu Figur 2 alternatives Ausführungsbeispiel. Sie zeigt einen keramischen Schichtkörper 25 mit einer Mehrzahl von keramischen Schichten 26, die übereinander angeordnet und durch ein gemeinsames Sintern stoffschlüssig miteinander verbunden sind. Die keramischen Schichten 26 haben dabei ebenfalls eine zumindest näherungsweise gleiche Zusammensetzung.

Zur Herstellung des keramischen Schichtkörpers 25 gemäß Figur 5 geht man weitgehend analog der Herstellung des keramischen Schichtkörpers 14 gemäß Figur 2 vor mit dem Unterschied, dass man anstelle der Rakel 10 gemäß Figur 1 die Rakel 20 mit strukturierter Kante 21 gemäß Figur 3 beim Aufrakeln der ersten Ausgangsschicht 13' bzw. der nachfolgend aufgerakelten weiteren Ausgangsschichten einsetzt. Nach dem Ablösen der derart strukturierten, übereinander angeordneten Ausgangsschichten erfolgt dann erneut, wie bereits erläutert, das freie Sintern dieses Schichtkörpers zu dem keramischen Schichtkörper 25. Die Dicke der einzelnen keramischen Schichten 26 gemäß Figur 5 beträgt im übrigen jeweils ca. 10 µm bis 100 µm, insbeosndere 50 µm.

Es ist offensichtlich, dass die erläuterten Ausführungsbeispiele vielfältigen Abwandlungen hinsichtlich der Form der strukturierten Kante 21 der Rakel 20 unterliegen. So können durch eine geeignete Ausführung der Kante 21 beispielsweise auch wellenförmige, zackenförmige, sägezahnförmige, rillenförmige oder kammförmige Strukturierungen erzeugt werden.

Weiter ist es ohne Weiteres möglich, auch in ihrer Zusammensetzung unterschiedliche Ausgangsschichten übereinander zu erzeugen, die dann zu dem keramischen Schichtkörper 14 bzw. dem keramischen Schichtkörper 25 gesintert werden.

Zudem kann die erste Ausgangsschicht 13' bzw. eine oder mehrere der weiteren Ausgangsschichten alternativ oder zusätzlich zu der Strukturierung mit Hilfe der Rakel 20 auch in einem dem Aufrakeln auf dem Substrat 11 nachfolgenden weiteren Verfahrensschritt erfolgen. Dieser weitere Verfahrensschritt umfasst dann beispielsweise eine Strukturierung mit Hilfe einer weiteren Rakel oder auch durch Prägen mit Hilfe eines entsprechend strukturierten Stempels.

Insbesondere ist es möglich, die erste Ausgangsschicht 13' bzw. die weiteren Ausgangsschicht zunächst strukturlos mit der Rakel 10 gemäß Figur 1 auf das Substrat aufzurakeln, und diese aufgerakelte Schicht dann mit Hilfe der Rakel 20 mit strukturierter Kante 21 nachträglich zu strukturieren.

Schließlich ist es im Rahmen der erläuterten Ausführungsbeispiele ebenfalls ohne Weiteres möglich, die Dicken der keramischen Schichten 13 bzw. der keramischen Schichten 26 unterschiedlich zu gestalten und/oder lediglich eine oder mehrere dieser Schichten mit einer Strukturierung zu versehen.

Die Dicke des erhaltenen keramischen Schichtkörpers 14 bzw. 25 hängt im Übrigen vor allem von der Anzahl der keramischen Schichten 13 bzw. 26 ab.

## Patentansprüche

1. Keramische Schicht mit einer Dicke von weniger als 100 µm, die durch Sintern einer Ausgangsschicht (13') mit Keramikpartikeln erhalten worden ist, **dadurch gekennzeichnet, dass** die in der Ausgangsschicht (13') enthaltenen Keramikpartikel eine mittlere Teilchengröße von weniger als 150 nm aufwiesen.

2. Keramische Schicht nach Anspruch 1, **dadurch gekennzeichnet, dass** die keramische Schicht (13, 22, 26) zumindest oberflächlich eine insbesondere wellenförmige, zackenförmige, sägezahnförmige, rillenförmige, kammförmige oder pyramidenförmige Strukturierung (23, 24) aufweist.

3. Keramische Schicht nach Anspruch 1, **dadurch gekennzeichnet, dass** die in der Ausgangsschicht (13') enthaltenen Keramikpartikel eine mittlere Teilchengröße von weniger als 50 nm aufwiesen.

4. Keramischer Schichtkörper mit einer Mehrzahl zumindest bereichsweise übereinander angeordneter, stoffschlüssig miteinander verbundener keramischer Schichten (13, 26) nach einem der vorangehenden Ansprüche.

5. Keramischer Schichtkörper nach Anspruch 4, **dadurch gekennzeichnet, dass** die keramischen Schichten (13, 26) eine zumindest näherungsweise gleiche Zusammensetzung aufweisen oder dass der Schichtkörper (14, 25) eine insbesondere periodische Abfolge von unterschiedlich zusammengesetzten keramischen Schichten (13, 26) aufweist.

6. Verfahren zur Herstellung einer keramischen Schicht, insbesondere einer Schicht nach einem der Ansprüche 1 bis 3, wobei eine keramikhaltige Suspension auf einem Substrat (11) in Form einer Ausgangsschicht (13') mit einer Dicke von weniger als 100 µm aufgebracht wird, die danach zu der keramischen Schicht (13, 22, 26) gesintert wird, **dadurch gekennzeichnet, dass** das Aufbringen durch Aufrakeln erfolgt.

7. Verfahren nach Anspruch 6, **dadurch gekennzeichnet, dass** als keramikhaltige Suspension eine Suspension, insbesondere ein Schlicker oder eine Paste, mit darin enthaltenen Keramikpartikeln eingesetzt wird, die eine mittlere Teilchengröße von weniger als 150 nm, insbesondere weniger als 50 nm, aufweisen.

8. Verfahren nach Anspruch 6 oder 7, **dadurch gekennzeichnet, dass** eine keramikhaltige Suspension mit einem Feststoffanteil von 30 Vol% bis 75 Vol% eingesetzt wird.

9. Verfahren nach 6 oder 7, **dadurch gekennzeichnet, dass** eine keramikhaltige Suspension mit einer eine Viskosität von 10 Pa s bis 10000 Pa s eingesetzt wird.

10. Verfahren nach Anspruch 6, **dadurch gekennzeichnet, dass** die Ausgangsschicht (13') vor dem Sintern zunächst getrocknet wird.

11. Verfahren nach einem der Ansprüche 6 bis 10, **dadurch gekennzeichnet, dass** mit dem Aufrakeln zumindest bereichsweise eine Strukturierung der Oberfläche der Ausgangsschicht (13') einhergeht, und/oder dass die Ausgangsschicht (13') nach dem Aufrakeln in einem weiteren Verfahrensschritt, insbesondere durch Prägen oder mittels einer Rakel (20), strukturiert wird.

12. Verfahren nach Anspruch 6 oder 11, **dadurch gekennzeichnet, dass** das Aufrakeln mit einer Rakel (10, 20) erfolgt, die eine strukturierte Kante (21), insbesondere eine sägezahnförmig, kammförmig, wellenförmig oder rillenfömig strukturierte Kante (21) aufweist, und die der Ausgangsschicht (13') eine Strukturierung (23, 24) aufprägt.

13. Verfahren nach einem der Ansprüche 6 bis 12, **dadurch gekennzeichnet, dass** die Ausgangsschicht (13') vor dem Sintern von dem Substrat (11) getrennt wird.

14. Verfahren zur Herstellung eines keramischen Schichtkörpers, insbesondere eines Schichtkörpers (14, 25) nach einem der Ansprüche 4 bis 6, wobei auf einem Substrat (11) eine keramikhaltige Suspension in Form einer ersten Ausgangsschicht (13') mit einer Dicke von weniger als 100 µm aufgerakelt wird, die erste Ausgangsschicht (13') getrocknet wird, mindestens eine weitere keramikhaltige Suspension in Form einer weiteren Ausgangsschicht mit einer vorgegebenen Dicke von weniger als 100 µm zumindest bereichsweise auf die getrocknete erste Ausgangsschicht (13') aufgerakelt wird, und die derart erzeugte Abfolge von Schichten dann zu dem keramischen Schichtkörper (14, 25) gesintert wird.

15. Verfahren nach Anspruch 14, **dadurch gekennzeichnet, dass** vor jedem Aufrakeln einer weiteren Ausgangsschicht die zuvor bereits aufgerakelte weitere Ausgangsschicht getrocknet wird.

16. Verfahren nach Anspruch 14 oder 15, **dadurch gekennzeichnet, dass** die erzeugte Abfolge von Ausgangsschichten vor dem Sintern von dem Substrat (11) getrennt wird.

17. Verfahren nach Anspruch 14, **dadurch gekennzeichnet, dass** eine Vielzahl von Ausgangsschichten mit zumindest annäherungsweise gleicher Dicke aufgerakelt werden.

18. Verfahren nach einem der Ansprüche 14 bis 17, **dadurch gekennzeichnet, dass** die erste Ausgangsschicht (13') und/oder mindestens eine der weiteren Ausgangsschichten insbesondere durch Prägen oder mittels der Rakel (20) strukturiert werden.

19. Verfahren nach einem der Ansprüche 14 bis 18, **dadurch gekennzeichnet, dass** als erste keramikhaltige Suspension und/oder als weitere keramikhaltige Suspension eine Suspension mit darin enthaltenen Keramikpartikeln eingesetzt wird, die eine mittlere Teilchengröße von weniger als 150 nm, insbesondere weniger als 50 nm, aufweisen.
